# EUROPÄISCHE PATENTANMELDUNG

(11) **EP 1 923 591 A2**
(43) Veröffentlichungstag der Anmeldung: **21.05.2008**
(21) Anmeldenummer: 07120058.8
(22) Anmeldetag: 06.11.2007
(51) Int. Cl.: F16D 48/06

(54) **Sensoranordnung für eine Kupplungsvorrichtung und Kupplungsvorrichtung mit einer solchen Sensoranordnung**

(30) Priorität: 18.11.2006 DE 102006054401
(71) Anmelder: ZF Friedrichshafen AG, 88038 Friedrichshafen (DE)
(72) Erfinder: Gessler, Frank, 88287 Grünkraut (DE); Führer, Kim, 88131 Lindau (DE); Puth, Thomas, 88046 Friedrichshafen (DE)

(57) **Zusammenfassung**

Die vorliegende Erfindung betrifft eine Sensoranordnung (1) für eine Kupplungsvorrichtung mit einem separaten Sensortell (8), das einen Befestigungsabschnitt (9) zum Befestigen des Sensorteiles(8) an einem feststehenden Teil (2), einen Sensor (11) zur Messung an einem beweglichen Teil (5) und mindestens eine Signalleitung (15, 16) aufweist, die einerseits mit dem Sensor (11) verbunden ist und andererseits zu einem Verbindungsabschnitt (14) des Sensorteiles (8) zum Verbinden der Signalleitung (15,16) mit einer feststehenden Einrichtung (7) führt. Erfindungsgemäß ist das Sensorteil (8) derart ausgebildet, dass der Befestigungsabschnitt (9) und der Verbindungsabschnitt (14) in einer gleichbleibenden Anordnung zueinander ausgerichtet sind, so dass der Verbindungsabschnitt (14) automatisch mit der feststehenden Einrichtung (7) verbunden ist, wenn der Befestigungsabschnitt (9) an dem feststehenden Teil (2) befestigt ist. Die vorliegende Erfindung betrifft ferner eine Kupplungsvorrichtung mit einer solchen Sensoranordnung (1).

## Beschreibung

Die vorliegende Erfindung betrifft eine Sensoranordnung für eine Kupplungsvorrichtung mit einem separaten Sensorteil, das einem Befestigungsabschnitt zum Befestigen des Sensorteiles an einem feststehenden Teil, einen Sensor zur Messung an einem beweglichen Teil und mindestens eine Signalleitung aufweist, die einerseits mit dem Sensor verbunden ist und andererseits zu einem Verbindungsabschnitt des Sensorteiles zum Verbinden der Signalleitung mit einer feststehenden Einrichtung führt. Die vorliegende Erfindung betrifft ferner eine Kupplungsvorrichtung mit einer solchen Sensoranordnung.

Aus dem Stand der Technik sind unterschiedliche Sensoranordnungen für Kupplungsvorrichtungen bekannt, die in erster Linie der Wegsensierung bzw. der Positionserfassung dienen. So beschreibt die DE 103 51 993 A1 eine Betätigungseinrichtung für eine Fahrzeugkupplung mit einer Wegsensierung. Um den Weg der Kupplung zu erfassen, ist an dem Kolben der Betätigungsehrichtung der Kupplung ein radial nach außen hervorstehendes Teil vorgesehen. Der von dem Kolben bzw. dem radial hervorstehenden Teil zurückgelegte Weg, der auch dem Kupplungsweg entspricht, wird über einen Seilzug oder einen Bowdenzug auf den Sensor übertragen. Von dem Sensor führt dann eine entsprechende Signalleitung zu einer nicht näher beschriebenen Signalverarbeitungseinheit.

Eine weitere Sensoranordnung für eine Kupplungsvorrichtung ist aus der DE 10 2004 003 287 A1 bekannt. Die bekannte Sensoranordnung umfasst einen an der Kupplungsglocke angebrachten Aufnehmer, durch den sich zwei Lichtleiter erstrecken, deren Enden auf die Außenverzahnung einer Zwischenplatte einer Doppelkupplung gerichtet sind. Über den einen Lichtleiter wird ein Lichtsignal auf die Außenverzahnung aufgebracht, wobei das reflektierte Licht von dem anderen Lichtleiter bzw. von dessen Ende erfasst und weitergeleitet wird, An den Aufnehmer schließt sich ein flexibles Kabel an, in dem beide Lichtleiter gebündelt sind und zur einer nicht näher dargestellten Einheit des Getriebes bzw. der Kupplung führen.

Die bekannten Sensoranordnungen sind mit dem Nachteil behaftet, dass sich deren Montage an dem Getriebe oder der Kupplung als schwierig und aufwendig erweist. Ferner kann durch die bekannten Lösungen nicht immer eine sichere Verbindung zwischen dem Sensorteil einerseits und der Signalverarbeitenden Einheit andererseits gewährleistet werden.

Der vorliegenden Erfindung liegt somit die Aufgabe zugrunde, eine Sensoranordnung für eine Kupplungsvorrichtung zu schaffen, die einfach und sicher montiert werden kann und eine sichere Verbindung zwischen dem Sensor und der signalverarbeitenden Einheit gewährleistet, Der Erfindung liegt ferner die Aufgabe zugrunde, eine Kupplungsvorrichtung mit einer solchen vorteilhaften Sensoranordnung zu schaffen.

Die Lösung dieser Aufgabe erfolgt anhand der in Patentanspruch 1 bzw. 13 angegebenen Merkmale. Vorteilhafte Ausführungsformen der Erfindung sind Gegenstand der Unteransprüche.

Die erfindungsgemäße Sensoranordnung für eine Kupplungsvorrichtung, wie beispielsweise einer Kupplungsvorrichtung für ein Kraftfahrzeug, weist zunächst ein separates Sensorteil auf. Das Sensorteil umfasst einen Befestigungsabschnitt zum Befestigen desselben an einem feststehenden Teil, wobei das feststehende Teil beispielsweise von dem Gehäuse der Kupplungsvorrichtung oder einem Gehäuse eines angrenzenden Getriebes gebildet sein kann. Das Sensorteil weist ferner einen Sensor zur Messung an einem beweglichen Teil auf, wobei das bewegliche Teil beispielsweise der Ausrückzylinder der Kupplungsvorrichtung sein kann. Das Sensorteil umfasst weiterhin eine Signalleitung, die einerseits mit dem Sensor verbunden ist und andererseits zu einem Verbindungsabschnitt des Sensorteiles führt, wobei der Verbindungsabschnitt des Sensorteiles dem Verbinden der Signalleitung mit einer feststehenden Einrichtung dient. Die feststehende Einrichtung kann beispielsweise eine signaiverarbeitende Einheit sein. Erfindungsgemäß ist das Sensorteil derart ausgebildet, dass der Besfestigungsabschnitt und der Verbindungsabschnitt in einer gleichbleibenden Anordnung zueinander ausgerichtet sind, so dass der Verbindungsabschnitt automatisch mit der feststehenden Einrichtung verbunden ist, wenn der Befestigungsabschnitt an dem feststehenden Teil befestigt ist.

Dank der gleichbleibenden Anordnung des Befestigungsabschnittes gegenüber dem Verbindungsabschnitt ist somit bereits bei der Montage des Sensorteiles sichergestellt, dass die Signalleitung mit der entsprechenden feststehenden Einrichtung sicher verbunden ist. Auch entfällt hierdurch ein Montageschritt, da ein Verbinden eines Steckers o. ä. mit der signalverarbeitenden Einheit nicht mehr erforderlich ist, nachdem das Sensorteil bzw. dessen Befestigungsabschnitt an dem feststehenden Teil befestigt wurde.

In einer bevorzugten Ausführungsform der erfindungsgemäßen Sensoranordnung ist das Sensorteil zumindest teilweise starr ausgebildet, so dass der Befestigungsabschnitt und der Verbindungsabschnitt in einer gleichbleibenden Anordnung zueinander ausgerichtet sind.

Grundsätzlich könnten der Befestigungsabschnitt und der Verbindungsabschnitt von dem selben Abschnitt des Sensorteiles gebildet sein. Um jedoch eine stabile Sensoranordnung zu schaffen, die einen langen Weg bis zur feststehenden Einrichtung überbrückt, hat es sich jedoch als vorteilhaft herausgestellt, wenn Befestigungsabschnitt und Verbindungsabschnitt von unterschiedlichen Abschnitten des Sensorteiles gebildet sind. In einer weiteren bevorzugten Ausführungsform der erfindungsgemäßen Sensoranordnung sind daher der Befestigungsabschnitt und der Verbindungsabschnitt von voneinander beabstandeten Abschnitten des Sensorteiles gebildet, zwischen denen sich ein Brückenabschnitt erstreckt. Befestigungsabschnitt, Verbindungsabschnitt und Brückenabschnitt sollten hierbei starr ausgebildet sein, um die zuvor erwähnte gleichbleibende Anordnung zueinander zu gewährleisten.

Ein weiteres Problem bei den bekannten Sensoranordnungen besteht darin, dass das freiliegende Kabel, das von dem Sensor zu einer feststehenden Einrichtung geführt ist, äußeren Einflüssen und somit Beschädigungen ausgesetzt ist. Um die Beschädigung der Signalleitung weitgehend auszuschließen, ist die Signalleitung zwischen dem Sensor einerseits und dem Verbindungsabschnitt andererseits in einer besonders bevorzugten Ausführungsform der erfindungsgemäßen Sensoranordnung innerhalb des Sensorteiles und/oder an dem Sensorteil anliegend angeordnet.

In einer vorteilhaften Ausführungsform der erfindungsgemäßen Sensoranordnung weist das feststehende Teil einen Befestigungsabschnitt, an dem der Befestigungsabschnitt des Sensorteiles befestigt werden kann, und die feststehende Einrichtung einen Verbindungsabschnitt auf, der mit dem Verbindungsabschnitt des Sensorteiles verbunden werden kann, wobei der Befestigungsabschnitt des feststehenden Teiles und der Verbindungsabschnitt der feststehenden Einrichtung in einer gleichbleibenden Anordnung zueinander ausgerichtet sind. Um eine sichere Befestigung des Sensorteiles und eine sichere Verbindung der Signalleitung zu gewährleisten, sollte diese gleichbleibende Anordnung der bereits von dem Sensorteil bekannten gleichbleibenden Anordnung entsprechen.

In einer weiteren vorteilhaften Ausführungsform der erfindungsgemäßen Sensoranordnung sind der Befestigungsabschnitt des Sensorteils und der Befestigungsabschnitt des feststehenden Teils derart ausgebildet, dass bei einer Montage des Sensorteils zunächst der Befestigungsabschnitt des Sensorteils durch den Befestigungsabschnitt des feststehenden Teils geführt ist und anschließend die Verbindung zwischen dem Verbindungsabschnitt des Sensorteils und dem Verbindungsabschnitt der feststehenden Einrichtung entsteht.

Gemäß einer besonders vorteilhaften Ausführungsform der erfindungsgemäßen Sensoranordnung sind die Befestigungsabschnitte, das heißt der Befestigungsabschnitt an dem Sensorteil einerseits und der Befestigungsabschnitt an dem feststehenden Teil andererseits, derart ausgebildet, dass diese lediglich in einer vorbestimmten Ausrichtung aneinander befestigt werden können. Auf diese Weise ist sichergestellt, dass der Verbindungsabschnitt des Sensorteiles auch tatsächlich mit dem Verbindungsabschnitt der feststehenden Einrichtung verbunden wird, wenn das Sensorteil an dem feststehenden Teil befestigt wird.

In einer weiteren vorteilhaften Ausführungsform der erfindungsgemäßen Sensoranordnung bilden die Verbindungsabschnitte eine ineinandersteckbare Steckverbindung aus. So kann beispielsweise der Verbindungsabschnitt an dem Sensorteil als Stecker bzw. Buchse ausgebildet sein, wohingegen der Verbindunsgsabschnitt an der feststehenden Einrichtung als Buchse bzw. Stecker ausgebildet sein kann. Durch entsprechende Ausbildung von Stecker und Buchse können hierdurch auch etwaige Fertigungstoleranzen überwunden werden.

In einer weiteren bevorzugten Ausführungsform der erfindungsgemäßen Sensoranordnung ist ferner ein Führungsteil für ein dem Sensor zugeordnetes Gegenstück vorgesehen, das an dem beweglichen Teil angeordnet ist, wobei das Führungsteil unabhängig von dem Sensorteil an einem feststehenden Teil angeordnet ist. Bei dem feststehenden Teil kann es sich um das bereits genannte feststehende Teil oder ein anderes feststehendes Teil handeln. Unter dem Gegenstück ist ein Teil zu verstehen, an dem der Sensor seine Signale abgreift. Durch die Trennung von Führungsteil einerseits und Sensorteil andererseits ist gewährleistet, dass die auf das Führungsteil wirkenden Erschütterungen o. ä. nicht auf das Sensorteil bzw. auf den Sensor übertragen werden. Hierdurch wird eine sicherere Sensierung erreicht.

In einer weiteren vorteilhaften Ausführungsform der erfindungsgemäßen Sensoranordnung ist der Sensor als Positionssensor zur Kupplungspositionserfassung ausgebildet.

Gemäß einer weiteren vorteilhaften Ausführungsform der erfindungsgemäßen Sensoranordnung ist das feststehende Teil als Teil der Kupplungsvorrichtung oder einer angrenzenden Vorrichtung, vorzugsweise als Gehäuse der Kupplungsvorrichtung oder eines angrenzenden Getriebes, ausgebildet.

In einer weiteren vorteilhaften Ausführungsform der erfindungsgemäßen Sensoranordnung ist das bewegliche Teil ein axial verschiebbarer Ausrückzylinder der Kupplungsvorrichtung. Der Begriff "axial" bezieht sich hierbei auf die Achse der Kupplungsvorrichtung.

In einer weiteren vorteilhaften Ausführungsform der erfindungsgemäßen Sensoranordnung ist die feststehende Einrichtung eine Steuerungselektronik, die beispielsweise der Steuerung von Getriebe und/oder Kupplung dienen kann.

Die erfindungsgemäße Kupplungsvorrichtung, wie beispielsweise eine Kupplungsvorrichtung in einem Kraftfahrzeug, weist eine Sensoranordnung der zuvor beschriebenen erfindungsgemäßen Art auf.

Die Erfindung wird im Folgenden anhand einer beispielhaften Ausführungsform unter Bezugnahme auf die zugehörigen Zeichnungen näher erläutert.

Es zeigen:
- Fig. 1: eine Seitenansicht einer Ausführungsform der erfindungsgemäßen Sensoranordnung für eine Kupplungsvorrichtung in teilweise geschnittener Darstellung,
- Fig. 2: eine Draufsicht auf die Schnittlinie A-A von Fig. 1 und
- Fig. 3: eine Draufsicht auf die Schnittlinie B-B von Fig. 1.

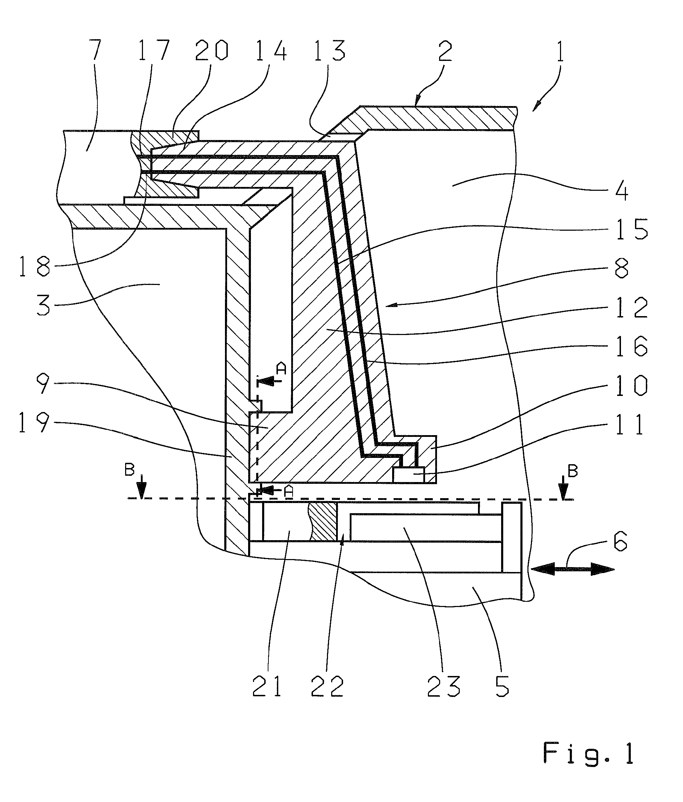

Fig. 1 zeigt eine Ausführungsform der erfindungsgemäßen Sensoranordnung 1. Die Sensoranordnung 1 befindet sich an bzw. in einem Getriebe-/Kupplungsgehäuse 2, das zum einen einen Getrieberaum 3 und zum anderen einen Kupplungsraum 4 umgibt. Das Getriebe-/Kupplungsgehäuse 2 ist gegenüber anderen Teilen des Getriebes oder der Kupplung als feststehendes Teil ausgebildet. So weist die Kupplung beispielsweise einen Ausrückzylinder 5 auf, der in Richtung des Pfeils 6, also in axialer Richtung, gegenüber dem Getriebe-/Kupplungsgehäuse 2 verschoben werden kann. Der Ausrückzylinder 5 ist somit als bewegliches Teil ausgebildet. An der Außenseite des Getriebe-/Kupplungsgehäuses 2 ist ferner eine feststehende Einrichtung in Form einer Steuerungselektronik 7 zur Steuerung von Getriebe und/oder Kupplung vorgesehen.

Die Sensoranordnung 1 umfasst ein separates Sensorteil 8, das aus Kunststoff besteht und mehrere Abschnitte umfasst. So weist das Sensorteil 8 zunächst einen Befestigungsabschnitt 9 zum Befestigen des Sensorteiles 8 an dem Getriebe-/Kupplungsgehäuse 2 auf. Des Weiteren umfasst das Sensorteil 8 einen Sensorabschnitt 10, in dem ein Sensor 11 zur Messung an dem beweglichen Teil in Form des Ausrückzylinders 5 angeordnet ist. Der Sensorabschnitt 10 ist in unmittelbarer Nähe des Befestigungsabschnittes 9 angeordnet und geht in einen sich radial nach außen erstreckenden Brückenabschnitt 12 über. Der Brückenabschnitt 12 erstreckt sich im Einbauzustand des Sensorteiles 8 durch eine Öffnung 13 in dem Getriebe-/Kupplungsgehäuse 2 nach außen und geht in einen Verbindungsabschnitt 14 des Sensorteiles 8 über, der dem Verbinden des Sensorteiles 8 mit der feststehenden Einrichtung in Form der Steuerungselektronik 7 dient.

Innerhalb des Sensorteiles 8 sind zwei Signalleitungen 15, 16 angeordnet. Die Signalleitungen 15, 16 sind einerseits mit dem Sensor 11 verbunden und erstrecken sich durch den Sensorabschnitt 10 und den Brückenabschnitt 12 bis hin zu dem Verbindungsabschnitt 14, wo sie mit den Signalleitungen 17, 18 der Steuerungselektronik 7 in Verbindung gebracht werden können. Die Signalleitungen 15, 16 könnten grundsätzlich auch an dem Sensorteil 8 außen anliegend angeordnet sein, wobei die innen liegende Anordnung eine sicherere Übertragung sowie eine geringere Beschädigungsgefahr gewährleistet.

Wie aus Fig, 1, die den Einbauzustand des Sensorteiles 8 zeigt, hervorgeht, ist das Sensorteil 8 derart ausgebildet, dass der Befestigungsabschnitt 9 und der Verbindungsabschnitt 14 in einer gleichbleibenden Anordnung zueinander ausgerichtet sind, so dass der Verbindungsabschnitt 14 automatisch mit der Steuerungselektronik 7 verbunden ist, wenn der Befestigungsabschnitt 9 an dem Getriebe-/Kupplungsgehäuse 2 befestigt ist. Dies wird bei der vorliegenden Ausführungsform unter anderem dadurch erreicht, dass das Sensorteil 8 in dem Befestigungsabschnitt 9, dem Brückenabschnitt 12 und dem Verbindungsabschnitt 14 starr ausgebildet ist. Im vorliegenden Beispiel ist das Sensorteil 8 darüber hinaus komplett starr ausgebildet, das heißt auch der Sensorabschnitt 10 ist starr. Aus Fig. 1 geht ferner hervor, dass der Befestigungsabschnitt 9 und der Verbindungsabschnitt 14 von voneinander beabstandeten Abschnitten des Sensorteiles 8 gebildet sind. Dies ist insofern von Vorteil, als dass der Befestigungsabschnitt 9 näher an dem Sensorabschnitt 10 angeordnet sein kann, um diesen sicher zu halten, wohingegen der Verbindungsabschnitt 14 weit radial nach außen zu der Steuerungselektronik 7 geführt sein kann.

Um zu gewährleisten, dass eine sichere Anordnung des Sensorteiles 8 an der Vorrichtung erfolgt, weist das Getriebe-/Kupplungsgehäuse 2 ferner einen Befestigungsabschnitt 19 auf, an dem der Befestigungsabschnitt 9 des Sensorteiles 8 befestigt werden kann. Ferner weist die Steuerungselektronik 7 einen Verbindungsabschnitt 20 auf, der mit dem Verbindungsabschnitt 14 des Sensorteiles 8 verbunden werden kann. Um zu gewährleisten, dass allein durch das Befestigen der Befestigungsabschnitte 9, 19 aneinander eine sichere Verbindung zwischen den Signalleitungen 15, 16 bzw. 17, 18 erfolgt, ist auch der Befestigungsabschnitt 19 des Getriebe-/Kupplungsgehäuse 2 und der Verbindungsabschnitt 20 der Steuerungselektronik 7 in einer gleichbleibenden Anordnung zueinander ausgerichtet, die der Anordnung des Befestigungsabschnittes 9 des Sensorteiles 8 zu dem Verbindungsabschnitt 14 des Sensorteiles 8 entspricht.

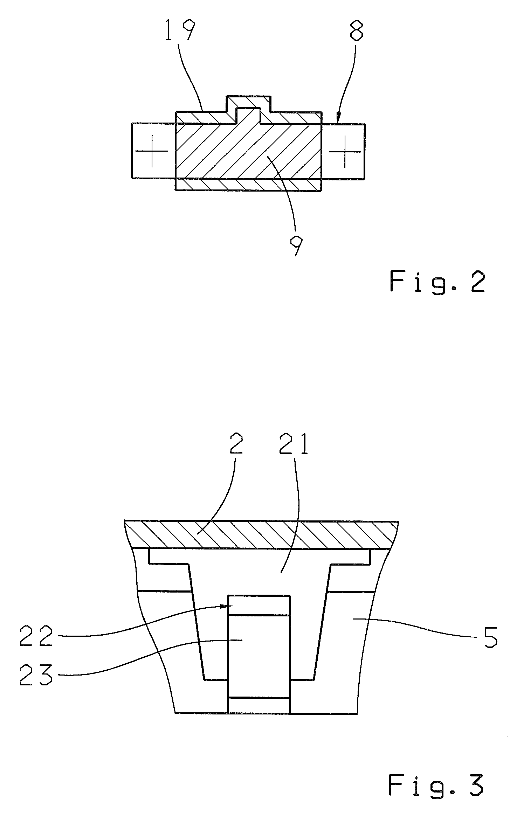

Wie aus Fig. 2 ersichtlich, die eine Draufsicht auf die Schnittlinie A-A von Fig. 1 zeigt, sind die Befestigungsabschnitte 9, 19 derart ausgebildet, dass diese lediglich in einer vorbestimmten Ausrichtung aneinander befestigt werden können. So weist der Befestigungsabschnitt 9 im Querschnitt eine auf dem Kopf stehende T-Form auf wohingegen der Befestigungsabschnitt 19 eine entsprechende auf dem Kopf stehend T-förmige Vertiefung bereitstellt. Somit ist lediglich eine Befestigung des Sensorteiles 8 in der in Fig. 1 gezeigten Ausrichtung möglich. Aus Fig. 2 ist ferner ersichtlich, dass an dem Befestigungsabschnitt 9 des Sensorteiles 8 weiterhin Flansche angeordnet sind, die ein Verschrauben des Sensorteiles 8 mit dem Getriebe-/Kupplungsgehäuse 2 ermöglichen. Die Verbindungsabschnitte 14, 20 sind derart aufeinander abgestimmt, dass diese eine ineinandersteckbare Steckverbindung ausbilden. Zu diesem Zweck ist der Verbindungsabschnitt 14 als konischer Stecker geformt, der in die konische Vertiefung in einem buchsenförmigen Verbindungsabschnitt 20 eingeführt sein kann.

Die Sensoranordnung 1 weist ferner ein Führungsteil 21 auf, das in der Draufsicht, die in Fig. 3 gezeigt ist, im Wesentlichen U-förmig ausgebildet ist. Zwischen den beiden Schenkeln des Führungsteil 21 ist eine Führung 22 vorgesehen, in der ein dem Sensor 11 zugeordnetes Gegenstück 23 geführt ist. Das Gegenstück 23 ist an dem Ausrückzylinder 5 der Kupplung vorgesehen und kann somit zusammen mit diesem in Richtung des Pfeiles 6 innerhalb der Führung 22 verschoben werden. An der dem Sensor 11 zugewandten Seite des Gegenstückes 23 können beispielsweise Markierungen o. ä. vorgesehen sein, die der Sensor 11 erfassen kann, um so Rückschlüsse auf die Positionen des Ausrückzylinders 5 in axialer Richtung 6 zu ziehen. Es handelt sich bei dem Sensor 11 um einen Positionssensor zur Kupplungspositionserfassung, wobei der Sensor 11 von jedwedem geeigneten Sensor gebildet sein kann, wie beispielsweise einem optischen, kapazitiven oder induktiven Sensor.

Das Führungsteil 21 ist unabhängig von dem Sensorteil 8 an dem Getriebe-/Kupplungsgehäuse 2 und beabstandet von dem Sensorteil 8 angeordnet. Dies hat den Vorteil, dass eventuelle Erschütterungen, die über den Ausrückzylinder 5 und das Gegenstück 23 auf das Führungsteil 21 einwirken, nicht auf das Sensorteil 8 übertragen werden, wo sie die Messung stören könnten.

### Bezugszeichen

- 1: Sensoranordnung
- 2: Getriebe-/Kupplungsgehäuse
- 3: Getrieberaum
- 4: Kupplungsraum
- 5: Ausrückzylinder
- 6: Pfeil
- 7: Steuerungselektronik
- 8: Sensorteil
- 9: Befestigungsabschnitt (Signalteil)
- 10: Sensorabschnitt
- 11: Sensor
- 12: Brückenabschnitt
- 13: Öffnung
- 14: Verbindungsabschnitt (Signalteil)
- 15: Signalleitung (Sensorteil)
- 16: Signalleitung (Sensorteil)
- 17: Signalleitung (Steuerungselektronik)
- 18: Signalleitung (Steuerungselektronik)
- 19: Befestigungsabschnitt (Getriebe-/Kupplungsgehäuse)
- 20: Verbindungsabschnitt (Steuerungselektronik)
- 21: Führungsteil
- 22: Führung
- 23: Gegenstück

## Patentansprüche

1. Sensoranordnung (1) für eine Kupplungsvorrichtung mit einem separaten Sensorteil (8), das einen Befestigungsabschnitt (9) zum Befestigen des Sensorteiles (8) an einem feststehenden Teil (2), einen Sensor (11) zur Messung an einem beweglichen Teil (5) und mindestens eine Signalleitung (15, 16) aufweist, die einerseits mit dem Sensor (11) verbunden ist und andererseits zu einem Verbindungsabschnitt (14) des Sensorteiles (8) zum Verbinden der Signalleitung (15, 16) mit einer feststehenden Einrichtung (7) führt, **dadurch gekennzeichnet, dass** das Sensorteil (8) derart ausgebildet ist, dass der Befestigungsabschnitt (9) und der Verbindungsabschnitt (14) in einer gleichbleibenden Anordnung zueinander ausgerichtet sind, so dass der Verbindungsabschnitt (14) automatisch mit der feststehenden Einrichtung (7) verbunden ist, wenn der Befestigungsabschnitt (9) an dem feststehenden Teil (2) befestigt ist.

2. Sensoranordnung nach Anspruch 1, **dadurch gekennzeichnet, dass** das Sensorteil (8) zumindest teilweise starr ausgebildet ist, so dass der Befestigungsabschnitt (9) und der Verbindungsabschnitt (14) in einer gleichbleibenden Anordnung zueinander ausgerichtet sind.

3. Sensoranordnung nach einem der Ansprüche 1 oder 2, **dadurch gekennzeichnet, dass** der Befestigungsabschnitt (9) und der Verbindungsabschnitt (14) von voneinander beabstandeten Abschnitten des Sensorteiles (8) gebildet sind, zwischen denen sich ein Brückenabschnitt (12) erstreckt.

4. Sensoranordnung nach einem der Ansprüche 1 bis 3, **dadurch gekennzeichnet, dass** die Signalleitung (15, 16) zwischen dem Sensor (11) einerseits und dem Verbindungsabschnitt (14) andererseits innerhalb des Sensorteiles (8) und/oder an dem Sensorteil (8) anliegend angeordnet ist.

5. Sensoranordnung nach einem der vorangehenden Ansprüche, **dadurch gekennzeichnet, dass** das feststehende Teil (2) einen Befestigungsabschnitt (19), an dem der Befestigungsabschnitt (9) des Sensorteiles (8) befestigbar ist, und die feststehende Einrichtung (7) einen Verbindungsabschnitt (20) aufweist, der mit dem Verbindungsabschnitt (14) des Sensorteiles (8) verbindbar ist, wobei der Befestigungsabschnitt (19) des feststehenden Teils (2) und der Verbindungsabschnitt (20) der feststehenden Einrichtung (7) in einer gleichbleibenden Anordnung zueinander ausgerichtet sind.

6. Sensoranordnung nach Anspruch 5, **dadurch gekennzeichnet, dass** bei der Montage des Sensorteils (8) zunächst der Befestigungsabschnitt (9) des Sensorteils (8) durch den Befestigungsabschnitt (19) des feststehenden Teils (2) geführt ist und anschließend die Verbindung zwischen dem Verbindungsabschnitt (14) des Sensorteils (8) und dem Verbindungsabschnitt (20) der feststehenden Einrichtung (7) ensteht.

7. Sensoranordnung nach einem der Ansprüche 5 oder 6, **dadurch gekennzeichnet, dass** die Befestigungsabschnitte (9, 19) derart ausgebildet sind, dass diese lediglich in einer vorbestimmten Ausrichtung aneinander befestigbar sind.

8. Sensoranordnung nach einem der Ansprüche 5 bis 7, **dadurch gekennzeichnet, dass** die Verbindungsabschnitte (14, 20) eine ineinandersteckbare Steckverbindung ausbilden.

9. Sensoranordnung nach einem der vorangehenden Ansprüche, **dadurch gekennzeichnet, dass** ferner ein Führungsteil (21) für ein dem Sensor (11) zugeordnetes Gegenstück (23) vorgesehen ist, das an dem beweglichen Teil (5) vorgesehen ist, wobei das Führungsteil (21) unabhängig von dem Sensorteil (8) an einem feststehenden Teil (2) angeordnet ist.

10. Sensoranordnung nach einem der vorangehenden Ansprüche, **dadurch gekennzeichnet, dass** der Sensor (11) als Positionssensor zur Kuppiungspositionserfassung ausgebildet ist.

11. Sensoranordnung nach einem der vorangehenden Ansprüche, **dadurch gekennzeichnet, dass** das feststehende Teil (2) als Teil der Kupplungsvorrichtung oder einer angrenzenden Vorrichtung, vorzugsweise als Gehäuse der Kupplungsvorrichtung oder eines angrenzenden Getriebes, ausgebildet ist.

12. Sensoranordnung nach einem der vorangehenden Ansprüche, **dadurch gekennzeichnet, dass** das bewegliche Teil (5) ein axial verschiebbarer Ausrückzylinder (5) der Kupplungsvorrichtung ist.

13. Sensoranordnung nach einem der vorangehenden Ansprüche, **dadurch gekennzeichnet, dass** die feststehende Einrichtung (7) eine Steuerungselektronik ist.

14. Kupplungsvorrichtung mit einer Sensoranordnung (1) nach einem der vorangehenden Ansprüche.
